(19) Europäisches Patentamt
European Patent Office
Office européen des brevets

(11) Veröffentlichungsnummer : **0 457 721 A1**

(12) **EUROPÄISCHE PATENTANMELDUNG**

(21) Anmeldenummer : **91810345.8**

(51) Int. Cl.$^5$ : **C09B 1/48,** G11B 7/24

(22) Anmeldetag : **06.05.91**

(30) Priorität : **15.05.90 CH 1637/90**

(43) Veröffentlichungstag der Anmeldung :
**21.11.91 Patentblatt 91/47**

(84) Benannte Vertragsstaaten :
**CH DE FR GB IT LI NL**

(71) Anmelder : **CIBA-GEIGY AG**
**Klybeckstrasse 141**
**CH-4002 Basel (CH)**

(72) Erfinder : **Kelemen, Jozsef, Dr.**
**Lehenmattstrasse 310/17**
**CH-4052 Basel (CH)**
Erfinder : **Altermatt, Hans, Dr.**
**Schönenbachstrasse 22**
**CH-4153 Reinach (CH)**

(54) **NIR-absorbierende Farbstoffe.**

(57) Beschrieben werden NIR-absorbierende Farbstoffe, welche durch Verküpung von Küpenfarbstoffen und anschliessender Oxidation in Abwesenheit eines anfärbbaren Substrats erhältlich sind.

Die neuen Verbindungen finden Verwendung als lichtabsorbierende Substanz in optischen Aufzeichnungsmedien.

EP 0 457 721 A1

Die vorliegende Erfindung betrifft NIR-absorbierende Farbstoffe sowie deren Verwendung als lichtabsorbierende Substanzen in optischen Aufzeichnungsmedien.

Die erfindungsgemässen NIR-absorbierenden Farbstoffe sind durch Verküpung von Küpenfarbstoffen und anschliessender Oxidation in Abwesenheit eines anfärbbaren Substrates erhältlich.

Geeignete erfindungsgemässe Farbstoffe sind solche Verbindungen, die aus Küpenfarbstoffen der Formel

(1)

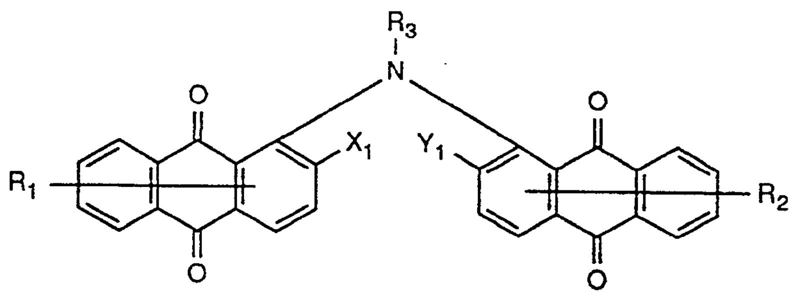

erhältlich sind, worin
von $X_1$ und $Y_1$ mindestens ein Rest Wasserstoff bedeutet und der andere $R_1$ oder $R_2$ sein kann, $R_3$ Wasserstoff, Niederalkyl oder Phenyl ist,
$R_1$ und $R_2$ gleich oder verschieden sind und Wasserstoff, Halogen, Trifluormethyl, Niederalkyl, Niederalkoxy, Niederalkylthio, Niederalkylcarbonyl, Niederalkoxycarbonyl, Amino, Mononiederalkylamino, Diniederalkylamino, Acylamino, Phenyl, Phenylamino, Phenyloxy, Phenylthio,
oder den Rest der Formel

(2)

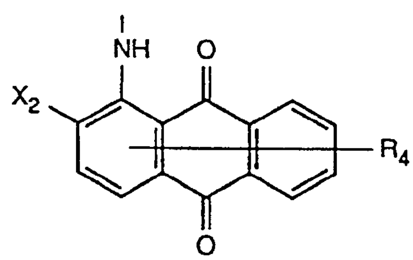

bedeuten, worin
$R_4$ -NH-CO-$R_1$ bedeutet oder gleich $R_1$ oder $R_2$ ist und
$X_2$ Wasserstoff bedeutet.

Niederalkyl, Niederalkoxy, Niederalkylthio, Niederalkylcarbonyl, Niederalkoxycarbonyl, Mononiederalkylamino und Diniederalkylamino stellen in der Regel solche Gruppen oder Gruppenbestandteile dar, die 1 bis 5, insbesondere 1 bis 3 Kohlenstoffatome aufweisen. Beispiele für derartige Gruppen sind Methyl, Ethyl, n-Propyl, Isopropyl, n-Butyl, sek.Butyl, tert.Butyl, Amyl oder Isoamyl, bzw. Methoxy, Ethoxy, Isopropoxy, Isobutoxy, tert.Butoxy oder tert.Amyloxy, bzw. Methylthio, Ethylthio, Propylthio oder Butylthio bzw. Methylamino, Ethylamino, Propylamino, Isopropylamino, n-Butylamino, Isobutylamino, tert.Butylamino oder Amylamino bzw. Dimethylamino, Methylethylamino oder Diethylamino.

"Acyl" ist besonders Formyl, Niederalkylcarbonyl, wie z.B. Acetyl oder Propionyl, oder vor allem Benzoyl. Weitere Acylbestandteile können Niederalkylsulfonyl, wie z.B. Methylsulfonyl oder Ethylsulfonyl sowie Phenylsulfonyl sein. Benzoyl und Phenylsulfonyl können durch Halogen, Methyl, Phenyl, Methoxy oder Ethoxy substituiert sein. Halogen bedeutet beispielsweise Fluor, Brom oder vorzugsweise Chlor.

Bevorzugt sind erfindungsgemässe Farbstoffe, die aus Küpenfarbstoffen der Formel (1), bei denen $R_1$ und $R_2$ unabhängig voneinander Wasserstoff oder Benzoylamino bedeuten, erhältlich sind.

Weitere wichtige erfindungsgemässe Farbstoffe sind aus Küpenfarbstoffen der Formel

(3) 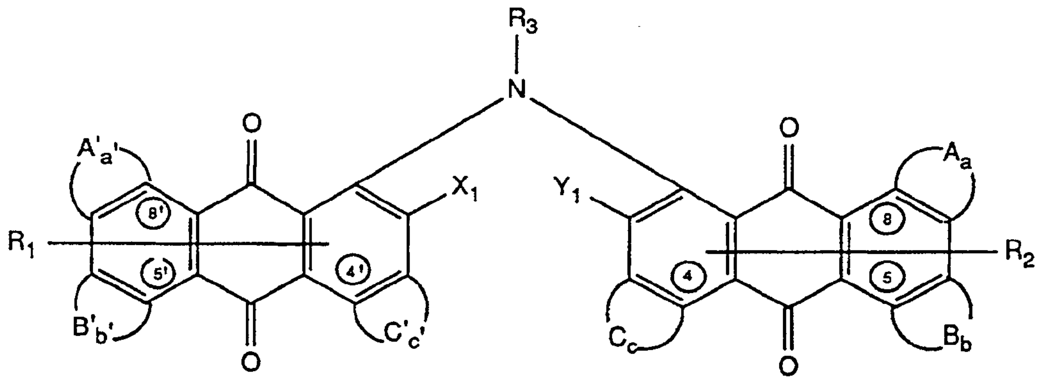

erhältlich,
worin, unabhängig voneinander,
$A_a$, $A'_{a'}$, $B_b$, $B'_{b'}$, $C_c$, $C'_{c'}$ einen zweiwertigen Rest der Formel

(4) 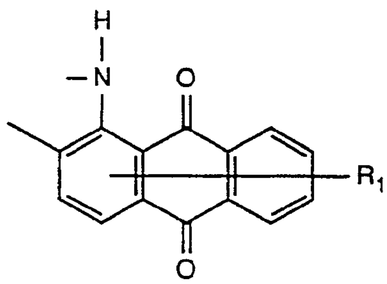

bedeuten, wobei $R_1$, $R_2$, $R_3$, $X_1$ und $Y_1$ die in Formel (1) angegebene Bedeutung haben, a, a′, b, b′, c und c′ 1 oder Null bedeuten und das Stickstoffatom in Formel (4) jeweils in 4,4′,5,5′,8 oder 8′-Stellung mit der Verbindung der Formel (3) verknüpft ist.

Vorzugsweise werden bei dieser Verbindungsklasse Farbstoffe verwendet, die aus Küpenfarbstoffen der Formel (3) erhältlich sind, bei denen $R_1$ und $R_2$ unabhängig voneinander Wasserstoff oder Benzoylamino bedeuten.

Weitere erfindungsgemässe Farbstoffe sind aus Küpenfarbstoffen der Formel

(5) 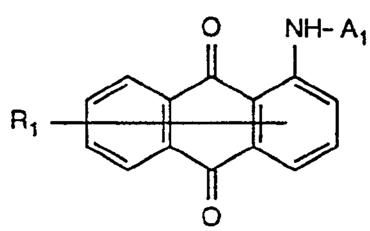

worin $A_1$ der Rest eines mono- oder polycyclischen Aromaten, eines mono- oder polycyclischen Heteroaromaten oder der Rest der Formel

(6) 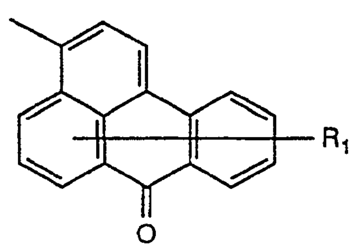

bedeutet, oder aus Küpenfarbstoffen der Formel

(7) 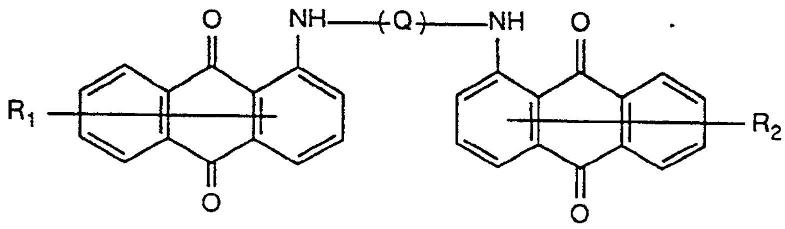

erhältlich, worin

Q einen zweiwertigen Rest eines mono- oder polycyclischen Aromaten, eines mono- oder polycyclischen Heteroaromaten oder eines mit einem gegebenenfalls -NH-verküpbaren Rest substituierten mono- oder polycyclischen Chinons bedeutet und

$R_1$ und $R_2$ in den Formeln (5) bis (7) die in Formel (1) angegebene Bedeutung haben.

Weitere erfindungsgemässe Farbstoffe sind aus Küpenfarbstoffen der Formel

(8) 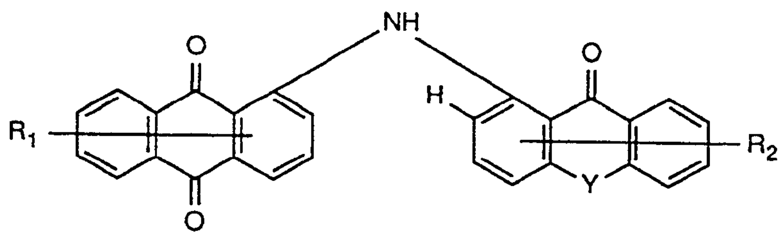

oder der Formel

(9) 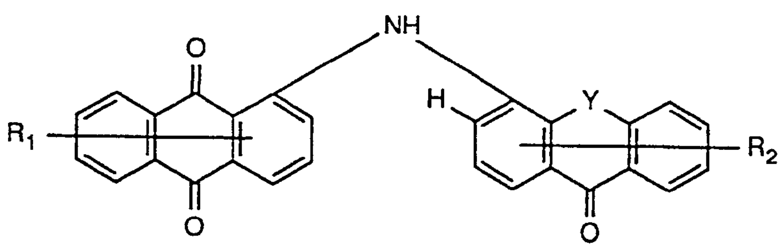

erhältlich,

worin Y -O-,

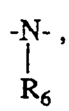 ,

-S- oder -Se- bedeutet,

wobei $R_6$ Wasserstoff oder Niederalkyl bedeutet,

und $R_1$ und $R_2$ die in Formel (1) angegebene Bedeutung haben oder einen -NH-verküpbaren Rest bedeuten.

Bei den polycyclischen Aromaten $A_1$ handelt es sich um linear und angular kondensierte aromatische Ringsysteme. Als Beispiele seien Inden, Fluoren, Naphthalin oder Phenanthren genannt, sowie höher kondensierte Aromaten wie die Acene, Chrysen, Pyren, Benzpyren oder Fluoranthen.

Bei den monocyclischen Heteroaromaten $A_1$ kommen Ringsysteme mit einem oder mehreren gleichen oder verschiedenen Heteroatomen in Betracht. Es handelt sich dabei um 5- oder 6-gliedrige Ringsysteme. Als Beispiele seien Pyrrol, Pyrazol, Imidazol, Furan, Thiophen, Oxazol, Isoxazol, Thiazol, Isothiazol, Triazol, Tetrazol, Pentazol, Pyridin, Pyran, Thiopyran, Pyrimidin, Pyridazin oder Triazin genannt.

Als Beispiele für polycyclische Heteroaromaten $A_1$ kommen Indolizin, Indol, Isoindol, Cumaron, Thionaphthen, Carbazol, Diphenylenoxid, Diphenylensulfid, Chinolin, Phthalazin, Chinazolin, Chinoxalin, Isochinolin, Acridin oder Phenanthridin in Betracht.

Bevorzugte Reste für $A_1$ sind Fluoranthen oder Chrysen.

Alle für $A_1$ aufgeführten Reste können die üblichen Substituenten enthalten, wie beispielsweise Halogen, Trifluormethyl, Niederalkyl, Niederalkoxy, Niederalkylthio, Niederalkylcarbonyl, Niederalkoxycarbonyl, Amino, Mononiederalkylamino, Diniederalkylamino, Acylamino, Phenyl, Phenylamino, Phenyloxy oder Phenylthio.

Bei den polycyclischen Chinonen handelt es sich um Verbindungen mit vorzugsweise 2 bis 6 ankondensierten Ringen, wie z.B. Naphthochinone, Anthrachinone, Phthaloylacridone, Anthrone, Benzanthrone, Anthanthrone, Anthrimide, Anthrapyridine, Anthrapyrimidine, Anthrapyridone, Anthrapyrimidone, Azabenzanthrone, Isothiazolanthrone oder Pyrazolanthrone. Dabei sind die Anthrachinone und Phthaloylacridone bevorzugt. Als monocyclisches Chinon kommt vorzugsweise p-Chinon in Betracht.

Bei den NH-verküpbaren Resten handelt es sich um die oben aufgezählten aminosubstituierten polycyclischen Chinone, die über den Aminostickstoff mit dem mono- oder polycyclischen Chinon in 1-Stellung verknüpft sind.

Die Herstellung der erfindungsgemässen Verbindungen erfolgt durch Verküpung, d.h. Reduktion der entsprechenden Ausgangsverbindungen in alkalischem Medium. Die Einstellung des pH-Wertes erfolgt dabei z.B. mit wässrigem Ammoniak, Alkalimetallcarbonaten, -hydrogencarbonaten oder vorzugsweise mit Alkalimetallhydroxiden.

Die Reduktion wird bei Temperaturen zwischen 40 und 80°C, vorzugsweise zwischen 50 und 70°C durchgeführt.

Vorzugsweise dient als Reduktionsmittel Natriumdithionit.

Die der Reduktion angeschlossene Oxidation wird gewöhnlich mit Luftsauerstoff durchgeführt.

Gewünschtenfalls können die Ausgangsverbindungen vor dem Reduktionsprozess mit einer Mineralsäure, z.B. Schwefel- oder Phosphorsäure behandelt werden. Die Temperaturen liegen dabei zwischen 100 und 170°C, vorzugsweise 140 und 150°C. Vorzugsweise wird bei dieser Behandlung als Mineralsäure konzentrierte Schwefelsäure verwendet.

Die erfindungsgemässen Farbstoffe, die durch Verküpung der Küpenfarbstoffe der Formel (1), (3), (5), (7), (8) oder (9) erhältlich sind, liegen als Zwischenprodukte vor oder sind als Nebenprodukte der handelsüblichen Küpenfarbstoffe vorhanden.

Die erfindungsgemässen Verbindungen finden Verwendung als lichtabsorbierende Substanz in optischen Aufzeichnungsmedien.

Der Aufbau der Aufzeichnungsmedien ist an sich bekannt.

Als Träger kommen z.B. Glasplatten oder -scheiben sowie Kunststoffplatten/-scheiben wie solche aus Polystyrol, Polycarbonat und insbesondere aus Polymethylmethacrylat in Frage.

Die erfindungsgemässen Aufzeichnungsmedien enthalten ausserdem bevorzugt eine lichtreflektierende Schicht, so dass das eingestrahlte und durch die farbige Schicht wandernde Licht (soweit es nicht absorbiert wird) an der Reflektorschicht reflektiert wird und nochmals durch die gefärbte Schicht wandert. Dabei ist es vorteilhaft, in diesen Fällen der Farbstoffschicht die Dicke $\lambda/4$ ($\lambda$ = Wellenlänge des eingestrahlten Lichts) zu geben, da dann durch Interferenz eine besonders hohe Nutzung (Schwächung) des eingestrahlten Lichts erreicht wird. Bei Verwendung der erfindungsgemässen Farbstoffe werden jedoch auch mit Schichtdicken, die deutlich unter $\lambda/4$ liegen, sehr empfindliche Aufzeichnungsträger erhalten, was überraschend ist.

Geeignete lichtreflektierende Materialien sind z.B. Metalle wie Aluminium, Rhodium, Gold, Zinn, Blei, Wismut oder Kupfer; in Frage kommen auch dielektrische Spiegel.

Die lichtabsorbierende Schicht kann in einer Ausführungsform der erfindungsgemässen Aufzeichnungsmedien nur aus einer Verbindung, die aus den Verbindungen der Formeln (1), (3), (5), (7), (8) oder (9) erhältlich ist, allein bestehen.

In einer weiteren Ausführungsform enthält die lichtabsorbierende Schicht neben einer dieser Verbindungen ein thermoplastisches Bindemittel, z.B. Polystyrol, Polyvinylacetat, Polyvinylpyrrolidon, Celluloseacetatbutyrat, Polysulfonamid, Polycarbonat oder Cellulosenitrat.

Die Dicke der lichtabsorbierenden Schicht kann in weiten Grenzen variieren; vorteilhaft ist eine Dicke von 5 bis 350 nm. Bevorzugt weist die lichtabsorbierende Schicht eine Dicke von 10 bis 200 nm auf. Besteht die lichtabsorbierende Schicht nur aus Farbstoff allein, so ist sie bevorzugt 10 bis 100 nm dick.

Das erfindungsgemässe Aufzeichnungsmedium lässt sich mit der fokussierten Strahlung einer Lichtquelle beschreiben und lesen. Als Lichtquellen kommen z.B. Laser und hierbei insbesondere solche in Frage, die im Wellenlängenbereich von 600 bis 850 nm emittieren.

Beispiele sind der Ga-Al-As-Diodenlaser und insbesondere der He-Ne-Laser.

Die erfindungsgemäss für die lichtabsorbierende Schicht verwendeten aus den Verbindungen der Formel (1), (3), (5) und (7) erhaltenen Farbstoffe weisen breite Absorptionsbanden im NIR-Bereich mit einem Maximum im Wellenlängenbereich von etwa 600 bis 800 nm auf, gefolgt oft von weiteren Bande(n) im Wellenlängenbereich zwischen 800 und 1400 nm.

Aufgrund der geschilderten Absorptionseigenschaften weisen optische Aufzeichnungsmedien, die mit diesen Verbindungen ausgerüstet sind, eine überaus grosse Empfindlichkeit gegenüber der Strahlung von Lichtquellen, insbesondere Lasern, auf, die im Wellenlängenbereich von 600 bis 850 nm emittiert. So ist es bei der Verwendung z.B. eines Ga-Al-As-Diodenlaser und insbesondere eines He-Ne-Laser möglich, die erfindungsgemässen Aufzeichnungsmedien mit Lichtpulsen von geringer Energie zu beschreiben und zu lesen.

Die Dicke der beim Aufdampfen aufwachsenden Schicht kann mit Hilfe bekannter Verfahren überwacht werden, z.B. mit Hilfe eines optischen Systems, welches das Reflexionsvermögen der mit dem Absorptionsmaterial bedeckten Reflexionsoberfläche misst. Vorzugsweise wird das Wachsen der Schichtdicke mit einem Schwingquarz verfolgt.

Für das Aufbringen der Schichten aus Lösung bereitet man in einem geeigneten Lösungsmittel, wie Methylenchlorid, Chloroform, Aceton, Methylethylketon, Cyclohexanon, Toluol, Acetonitril, Essigester, Methanol, eine Lösung oder gegebenenfalls eine Dispersion der erfindungsgemässen Verbindung und setzt gegebenenfalls eines der zuvor genannten thermoplastischen Bindemittel bzw. Gemische aus mehreren Bindemitteln zu.

Diese Farbstoffzubereitung kann durch Schleudern, Rakeln oder Tauchen auf ein zuvor gereinigtes Substrat aufgebracht und die Schicht an der Luft getrocknet werden. Der Film kann auch im Vakuum und/oder bei erhöhter Temperatur getrocknet werden.

Je nach Systemaufbau wird zuerst der Farbstoff und dann der Reflektor aufgebracht oder, vorzugsweise, umgekehrt verfahren. Auf das Aufbringen einer reflektierenden Schicht kann gegebenenfalls verzichtet werden.

Die nachfolgenden Beispiele dienen der Erläuterung der Erfindung, ohne sie darauf zu beschränken. Teile bedeuten Gewichtsteile.

Beispiel 1: 5 g Di-(1-anthrachinonyl)-amin werden mit 0,75 g Sulfitablauge in 100 ml Wasser in einer Sandmühle gemahlen. Nach dem Abtrennen des Sandes wird die Suspension mit entionisiertem Wasser auf 750 ml gestellt und unter Stickstoff (Luftabschluss) auf 50°C erwärmt. Nach der Zugabe von 45 ml wässriger NaOH Lösung (30 %) und 15 g Natriumdithionit wird unter schwachem Rühren und unter Stickstoff auf 60-65°C erwärmt. Nach 3 Stunden wird durch Einleiten von Luft die Lösung oxydiert, wodurch eine dunkelbraune Ausfällung entsteht. Der Niederschlag wird abfiltriert, mit Wasser neutral gewaschen und getrocknet. Ausbeute 4,7 g schwarzbraunes Produkt. Dieses Rohprodukt wird mit 500 ml Chloroform heiss ausgezogen und der Rückstand getrocknet. Man erhält so 1,5 g rohes dunkelgrünes Produkt, das aus 200 ml o-Dichlorbenzol umkristallisiert werden kann. Der grüne Farbstoff zeigt in Pyridin bei Raumtemperatur ein Absorptionsmaximum bei 687 und 1198 nm.

Beispiel 2: 21,5 g Di-(1-anthrachinonyl)-amin werden bei Raumtemperatur in 200 ml Schwefelsäure (90 %) unter gutem Rühren eingestreut. Die Lösung wird auf 140°C erwärmt und 4 Stunden bei dieser Temperatur verrührt. Nach dem Erkalten wird auf 2 l Eis-Wasser 1:1 unter kräftigem Rühren ausgetragen. Der rotbraune Niederschlag wird abfiltriert und mit Wasser neutral gewaschen. Nach dem Trocknen werden 21 g eines dunkelbraunen Produktes erhalten. Das Rohprodukt enthält neben etwas unverändertem Di-(1-anthrachinonyl)-amin noch Nebenprodukte. Durch Ausziehen mit Chloroform und Einengen des Extraktes wird das Coeramidonin (Dinaphtho[2,3-c:3′,2′,1′-kl] acridin-5,10,17-trion) zu 85 % als rotbraunes Pulver erhalten.

5 g Coeramidonin werden mit 10 ml Methanol in einem 1,5 l Dreihalskolben angeteigt, mit 750 ml entionisiertem Wasser versetzt und unter Stickstoff bei schwachem Rühren auf 50°C erwärmt. Nach der Zugabe von 45 ml wässriger NaOH-Lösung (30 %) und 15 g Natriumdithionit wird während 3 Stunden unter Stickstoff bei 60-65°C langsam gerührt. Nach dem Erkalten wird durch die Lösung bis zur vollständigen Oxidation Luft eingeblasen. Der ausgefallene dunkelgrüne Farbstoff wird abfiltriert und mit Wasser nachgewaschen. Nach dem Trocknen werden 4,8 g des dunkelgrünen Produktes erhalten, das in allen Teilen dem nach Beispiel 1 hergestellten Produkt entspricht.

Beispiel 3: Wird in Beispiel 1 das Di-(1-anthrachinonyl)-amin durch folgendes Anthrimid der Formel

(101)

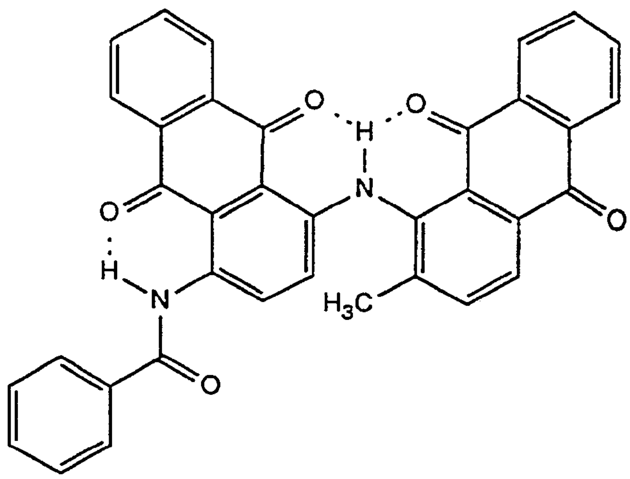

ersetzt, so wird ein Produkt erhalten, das ein Absorptionsmaximum bei 1219 nm aufweist, gemessen als KBr-Pressling. Das Ausgangsanthrimid hat unter denselben Bedingungen ein Absorptionsmaximum bei 569 nm.

Beispiel 4: Wird in Beispiel 1 das Anthrimid durch den Farbstoff der Formel

(102)

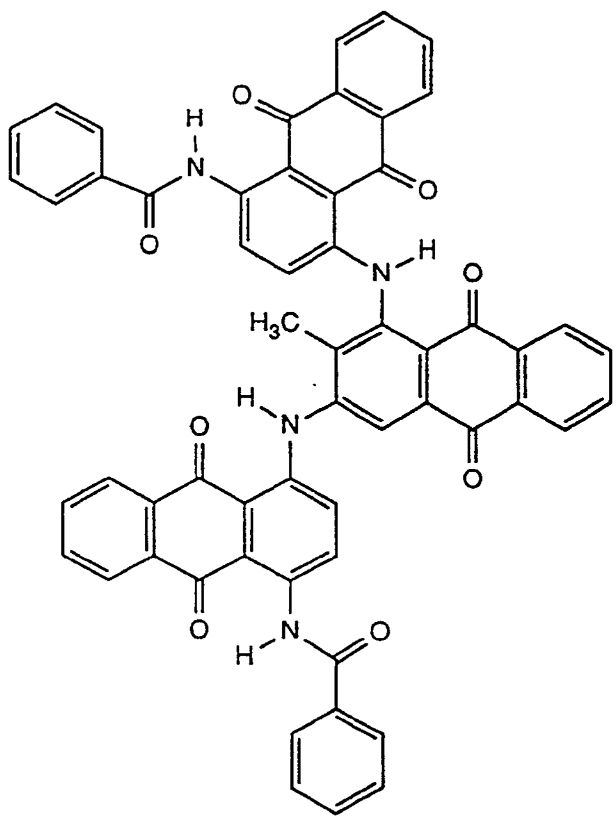

ersetzt, so wird ein grauschwarzes Produkt erhalten, das sich in konzentrierter Schwefelsäure mit olivebrauner Farbe löst und als KBr-Pressling ein Absorptionsmaximum bei 1283 nm aufweist. Der blauviolette Ausgangsfarbstoff löst sich mit grüner Farbe in Schwefelsäure und zeigt ein Absorptionsmaximum als KBr-Pressling von 572 nm.

Beispiel 5: 5 g N,N-Di-(1-anthrachinonyl)-methylamin - hergestellt aus 1-Chloranthrachinon und 1-Methylaminoanthrachinon - werden mit 0,75 g Sulfitablauge in 100 ml Wasser in einer Sandmühle gemahlen. Nach dem Abtrennen des Sandes wird die Suspension mit entionisiertem Wasser auf 750 ml gestellt und unter Stickstoff (Luftabschluss) auf 50°C erwärmt. Nach der Zugabe von 45 ml wässriger NaOH Lösung (30 %) und 15 g Natriumdithionit wird unter schwachem Rühren und unter Stickstoff auf 60-65°C erwärmt. Nach 3 Stunden wird

durch Einleiten von Luft die Lösung oxydiert, wodurch eine dunkelbraune Ausfällung entsteht. Der Niederschlag wird abfiltriert, mit Wasser neutral gewaschen und getrocknet. Ausbeute 4,3 g schwarzbraunes Produkt. Dieses Rohprodukt wird mit 500 ml Aceton kalt ausgezogen. Es werden so 2,5 g dunkelbraunes Produkt erhalten, das sich in konz. Schwefelsäure mit bordeauxroter Farbe löst. Das Ausgangsanthrimid löst sich mit blassgelbgrüner Farbe. Der reine Farbstoff zeigt in Chloroform bei Raumtemperatur ein Absorptionsmaximum bei 686 und 995 nm. Das Ausgangsprodukt hat ein Absorptionsmaximum bei 502 nm.

Die NIR-Spektren wurden an einem Perkin-Elmer Lambda-9 Spektrophotometer bestimmt.

Beispiel 6: 5 Teile des Kondensationsproduktes aus 1-Chlor-anthrachinon und 4-Amino-xanthen-9-on der Formel

(103) 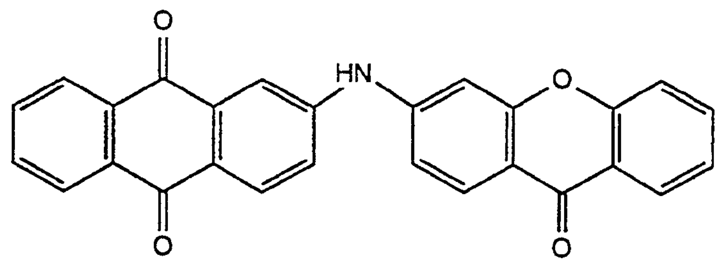

werden, wie in Beispiel 1 angegeben, verküpt. Es werden so 4,5 Teile eines dunkelbraunen Produktes erhalten, das sich in konzentrierter Schwefelsäure mit blaugrüner Farbe löst. Das Ausgangsanthrimid löst sich mit gelbbrauner Farbe in Schwefelsäure.

Beispiel 7: Wird in Beispiel 6 das 4-Amino-xanthen-9-on durch 4-Aminothioxanthen-9-on ersetzt und sonst gleich verfahren, so werden 4,6 Teile eines dunkelbraunen Farbstoffes erhalten, der sich in konzentrierter Schwefelsäure mit blaugrüner Farbe löst. Der nicht verküpte Farbstoff löst sich mit gelbgrüner Farbe in Schwefelsäure.

Anwendungsbeispiel: 1,0 g Farbstoff des Beispiels 1 wird mit 1,0 g Cellulosenitrat gemischt. Das Gemisch wird mit 120 g Cyclohexanon versetzt und anschliessend durch einen Filter mit einer Porengrösse von 0,45 µm gegeben. Die resultierende Lösung wird dann mit einer Umdrehungszahl von ca. 2000 U/min auf eine runde Glasscheibe, die mit einer 50 nm dicken Schicht Aluminium beschichtet ist, aufgeschleudert. Man erhält eine ca. 160 nm dicke lichtabsorbierende Schicht auf der Oberfläche.

Der erhaltene Aufzeichnungsträger wird mit den Lichtpulsen eines He-Ne-Lasers ($\lambda$ = 633 nm) bestrahlt, der auf die Oberfläche der Beschichtung fokussiert ist. Durch die eingestrahlte Energie wird pro Puls eine kreisrunde Vertiefung mit steilen Wänden und ohne Wulst an der Oberfläche erzeugt.

Die beschriebenen Stellen werden mit einem He-Ne-Laser gelesen und es ergeben sich dabei Signale mit einem hohen Signal/Rausch-Verhältnis.

## Patentansprüche

1. NIR-absorbierende Farbstoffe, welche durch Verküpung von Küpenfarbstoffen und anschliessender Oxidation in Abwesenheit eines anfärbbaren Substrats erhältlich sind.

2. Farbstoffe gemäss Anspruch 1, dadurch gekennzeichnet, dass sie aus Küpenfarbstoffen der Formel

(1) 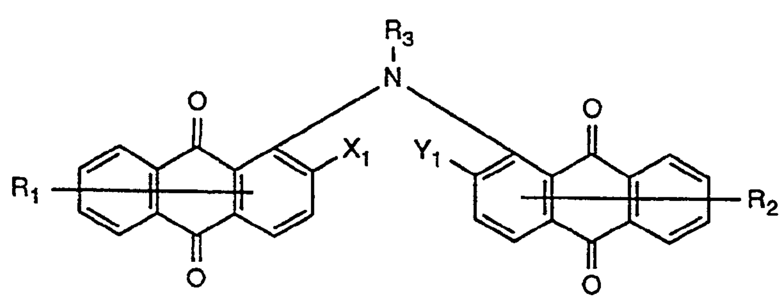

erhältlich sind, worin
von $X_1$ und $Y_1$ mindestens ein Rest Wasserstoff bedeutet und der andere $R_1$ oder $R_2$ sein kann, $R_3$ Was-

serstoff, Niederalkyl oder Phenyl ist,
$R_1$ und $R_2$ gleich oder verschieden sind und Wasserstoff, Halogen, Trifluormethyl, Niederalkyl, Niederalkoxy, Niederalkylthio, Niederalkylcarbonyl, Niederalkoxycarbonyl, Amino, Mononiederalkylamino, Diniederalkylamino, Acylamino, Phenyl, Phenylamino, Phenyloxy, Phenylthio,
oder den Rest der Formel

(2) 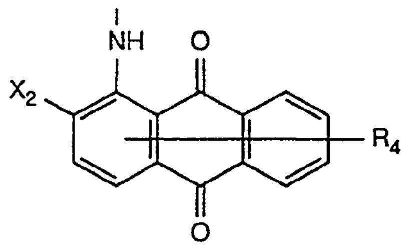

bedeuten, worin
$R_4$ -NH-CO-$R_1$ bedeutet oder gleich $R_1$ oder $R_2$ ist, und
$X_2$ Wasserstoff bedeutet.

3. Farbstoffe gemäss Anspruch 1, dadurch gekennzeichnet, dass sie aus Küpenfarbstoffen der Formel

(3) 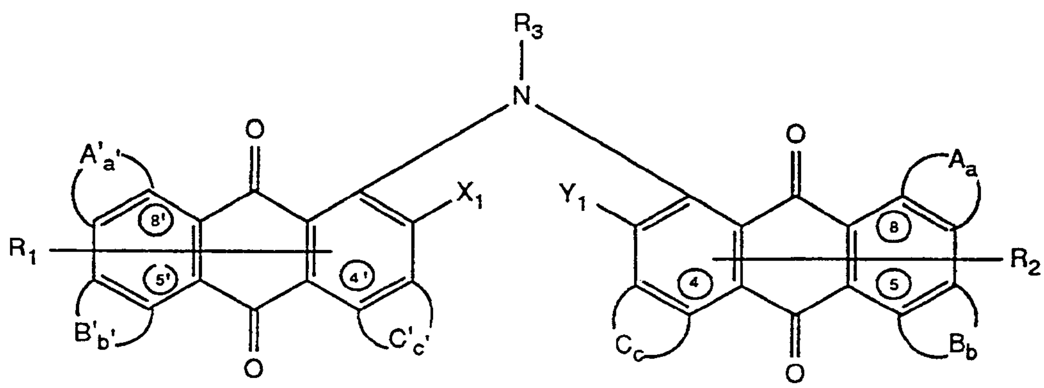

erhältlich sind,
worin, unabhängig voneinander,
$A_a$, $A'_{a'}$, $B_b$, $B'_{b'}$, $C_c$, $C'_{c'}$ einen zweiwertigen Rest der Formel

(4) 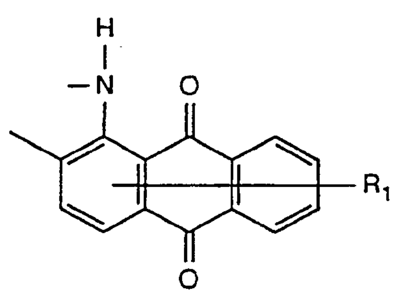

bedeuten, wobei $R_1$, $R_2$, $R_3$, $X_1$ und $Y_1$ die in Formel (1) angegebene Bedeutung haben, a, a', b, b', c und c' 1 oder Null bedeuten und das Stickstoffatom in Formel (4) jeweils in 4,4',5,5',8 oder 8'-Stellung mit der Verbindung der Formel (3) verknüpft ist.

4. Farbstoffe gemäss Anspruch 1, dadurch gekennzeichnet, dass sie aus Küpenfarbstoffen der Formel

(5) 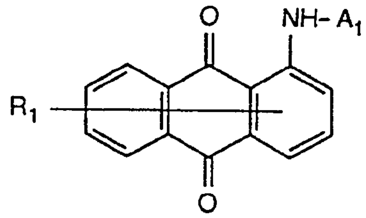

erhältlich sind, worin

$A_1$ der Rest eines mono- oder polycyclischen Aromaten, eines mono- oder polycyclischen Heteroaromaten oder der Rest der Formel

(6) 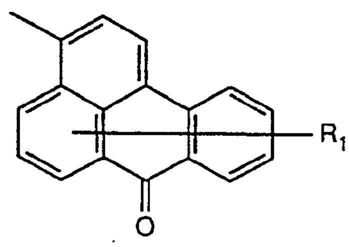

worin $R_1$ die in Formel (1) angegebene Bedeutung hat.

5. Farbstoffe gemäss Anspruch 1, dadurch gekennzeichnet, dass sie aus einem Küpenfarbstoff der Formel

(7) 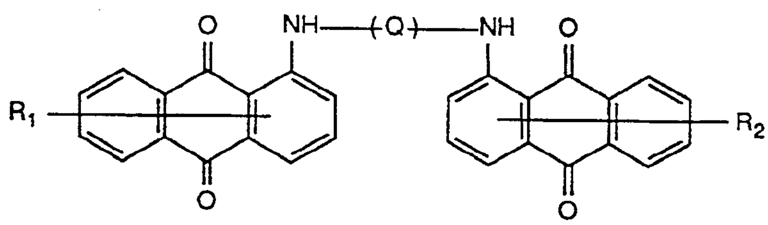

erhältlich sind, worin

Q einen zweiwertigen Rest eines mono- oder polycyclischen Aromaten, eines mono- oder polycyclischen Heteroaromaten oder eines mit einem gegebenenfalls -NH-verküpbaren Rest substituierten mono- oder polycyclischen Chinons bedeutet und

$R_1$ und $R_2$ die in Formel (1) angegebene Bedeutung haben.

6. Farbstoffe gemäss Anspruch 1, dadurch gekennzeichnet, dass sie aus einem Küpenfarbstoff der Formel

(8) 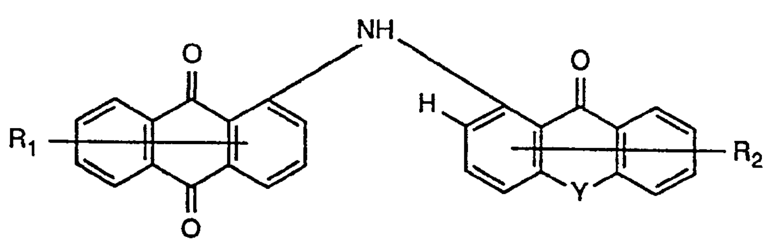

oder der Formel

(9) 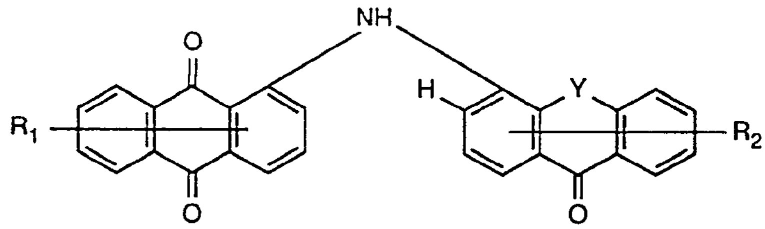

erhältlich sind,
worin Y -O-,

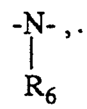

-S- oder -Se- bedeutet,
wobei $R_6$ Wasserstoff oder Niederalkyl bedeutet,
und $R_1$ und $R_2$ die in Formel (1) angegebene Bedeutung haben oder einen -NH-verküpbaren Rest bedeuten.

7. Farbstoffe gemäss einem der Ansprüche 1 bis 6, dadurch gekennzeichnet, dass die Verküpung durch alkalische Reduktion mit Natriumdithionit und die anschliessende Oxidation mit Luftsauerstoff durchgeführt wird.

8. Farbstoffe gemäss einem der Ansprüche 1 bis 5, dadurch gekennzeichnet, dass sie vor der Reduktion mit einer mineralischen Säure behandelt werden.

9. Verwendung der Farbstoffe gemäss einem der Ansprüche 1 bis 8 als lichtabsorbierende Substanz in optischen Aufzeichnungsmedien.

Europäisches Patentamt

# EUROPÄISCHER RECHERCHENBERICHT

Nummer der Anmeldung

EP 91810345.8

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
| X | EP - A2/A3 - 0 047 205 (PCUK PRODUITS CHIMIQUES UGINE KUHLMANN) * Zusammenfassung; Seite 5, Formel IV * -- | 1,2 | C 09 B 1/48<br>G 11 B 7/24 |
| A | CH - A5 - 653 352 (CIBA-GEIGY AG) * Anspruch 1 * -- | 1,2 | |
| A | US - A - 4 614 705 (UMEHARA) * Spalte 1, Zeilen 4-9; Spalte 3, Zeilen 7-17; Spalte 5, Zeile 50 - Spalte 7, Zeile 17 * -- | 2,9 | |
| A | FR - A1 - 2 602 366 (CIBA-GEIGY AG) * Ansprüche 1,17 * ---- | 2,9 | |
| | | | RECHERCHIERTE SACHGEBIETE (Int. Cl.⁵) |
| | | | C 09 B<br>G 11 B |

Der vorliegende Recherchenbericht wurde für alle Patentansprüche erstellt.

| Recherchenort | Abschlußdatum der Recherche | Prüfer |
|---|---|---|
| WIEN | 21-08-1991 | HAUSWIRTH |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03 82